# EUROPÄISCHE PATENTANMELDUNG

(11) **EP 1 632 855 A1**
(43) Veröffentlichungstag der Anmeldung: **08.03.2006**
(21) Anmeldenummer: 05105735.4
(22) Anmeldetag: 28.06.2005
(51) Int. Cl.: G06F 11/26

(54) **Funktionseinheit zur Ausführung von logischen Testfällen auf einem an eine zu prüfende Einheit angekoppelten Testsystem und entsprechendes Verfahren**

(30) Priorität: 27.08.2004 DE 102004041827
(71) Anmelder: Robert Bosch GmbH, 70442 Stuttgart (DE)
(72) Erfinder: Holzapfel, Gerald, 71672, Marbach (DE); Filp, Gerhard, 71691, Freiberg (DE); Allmendinger, Tilo, 74629, Pfedelbach (DE); Gross, Uwe, 71287, Weissach (DE); Bayer, Alexander, 71549, Auenwald-Hohenweiler (DE); Goebel, Sven, 70499, Stuttgart (DE); Lebert, Klaus, 70372, Stuttgart (DE)

(57) **Zusammenfassung**

Die vorliegende Erfindung betrifft eine Funktionseinheit (10) zur Ausführung von logischen Testfällen (40_A, 40_B, 40) auf einem an eine zu prüfende Einheit (50) angekoppeltes Testsystem (32), wobei die Funktionseinheit (10) dazu geeignet ist, zwischen die logischen Testfälle (40_A, 40_B, 40) und das Testsystem (32) derart zwischengeschaltet zu werden, daß die logischen Testfälle (40_A, 40_B, 40) von dem Testsystem (32) entkoppelt werden, und dabei als Mediator eine Ausführung der logischen Testfälle (40_A, 40_B, 40) auf dem Testsystem (32) zu unterstützen.

## Beschreibung

Die vorliegende Erfindung betrifft eine Funktionseinheit zur Ausführung von logischen Testfällen auf einem an eine zu prüfende Einheit angekoppelten Testsystem. Ferner betrifft die vorliegende Erfindung ein entsprechendes Verfahren.

### Stand der Technik

Bei der Software-Entwicklung für Steuergeräte im Automobilbereich werden Softwaretests in jeder Entwicklungsphase (V-Zyklus) durchgeführt. Zur Automatisierung dieser Softwaretests werden unterschiedliche Techniken, Geräte und Strategien unterschiedlicher Herstellern bzw. Eigenentwicklungen eingesetzt.

Bedingt durch diese Situation gibt es in der Automobilindustrie keine standardisierte Testbeschreibungsmethodik und keine standardisierte Testspezifikationssyntax. Die Testspezifikationen liegen heute in unterschiedlichen Formen vor (Prosabeschreibung, Ablaufdiagramme, Pseudocode etc.) und sind daher in anderen Organisationen als der erstellenden Organisation schwer verständlich.

Um die Tests automatisiert ablaufen lassen zu können, werden diese mit Hilfe von Programmier- oder Skriptsprachen umgesetzt. Hierzu gibt es auf dem Markt Testgeräte / Testsysteme welche über Fernsteuerungs- und Programmierschnittstellen zu anderen Software-Werkzeugen verfügen. Diese Schnittstellen sind jedoch herstellerspezifisch. Die Umsetzung erfolgt meistens maßgeschneidert, d.h. testsystem- und organisationsspezifisch, auf die eingesetzten Systeme. Somit ist es fast unmöglich, die umgesetzten Testbeschreibungen auf Testsysteme (Geräte) unterschiedlicher Hersteller oder andere in Organisationen zu portieren. Daraus resultiert, dass bei der Übernahme von Tests aus anderen Organisationen auch deren Testumgebungen eingesetzt werden müssen, da der Portierungsaufwand zu hoch ist.

Automatisierte Tests für elektronische Steuerungen sind heute weitreichend eingeführt und bekannt. Zur Automatisierung derartiger Tests werden verschiedene Techniken, Geräte und Strategien unterschiedlicher Hersteller bzw. Eigenentwicklungen eingesetzt. Dabei sind die notwendigen Schnittstellen zwischen den Testfällen, die die automatisierten Tests implementieren, und dem Testsystem, die den Zugang zu der zu prüfenden Einheit, im folgenden als Prüfling bezeichnet, herstellen, herstellerspezifisch und proprietär.

Dabei kommt es zu einer Reihe von Problemen. Zum einen können Testfälle nicht unabhängig vom eingesetzten Testsystem entwickelt werden. Eine Änderung oder ein Austausch des verwendeten Testsystems macht im allgemeinen eine Anpassung der Testfälle notwendig. Eine derartige Anpassung ist unter Umständen sehr aufwendig, da die Testfälle im allgemeinen direkt die proprietären Schnittstellen der Testsysteme aufrufen und die Schnittstellen der jeweiligen Testsysteme sich wesentlich voneinander unterscheiden. Eine Erstellung von logischen Testfällen, die unabhängig von einem jeweiligen Testsystem sind, ist dadurch erschwert. Ein Austausch von Tests bzw. Testfällen zwischen Steuergeräteherstellern und deren Kunden ist nur dann einfach möglich, wenn beide Partner identische Testsysteme verwenden. Eine Wiederverwendung von Testfällen ist dabei sehr stark eingeschränkt.

Ferner ist aber auch eine Wiederverwendung von Testsystemen nicht ohne weiteres möglich. Testfälle müssen in einer Testbeschreibungssprache oder einer Testablaufsteuerung realisiert sein, die von dem verwendeten Testsystem unterstützt werden. Wird eine Testbeschreibungssprache oder eine Testablaufsteuerung von dem verwendeten Testsystem nicht unterstützt, dann muß zunächst eine aufwendige Übertragung bzw. Portierung der Testfälle in die von dem Testsystem unterstützte Sprache bzw. Ablaufsteuerung erfolgen, bevor das Testsystem für den bereits vorhanden Test bzw. den Testfall verwendet werden kann. Unter Umständen ist eine derartige Portierung sehr aufwendig oder technisch nicht möglich, so daß das Testsystem für den Test bzw. für die Testfälle nicht eingesetzt werden kann.

Darüber hinaus ist in vielen bekannten Lösungen ein Testfall zudem streng an eine bestimmte Variante der zu prüfenden Einheit bzw. des Prüflings gekoppelt. So sind in diesen Testfällen bspw. konkrete physikalische Adressen zum Zugriff auf Ein-/Ausgangssignale des Prüflings codiert. Eine Wiederverwendung dieser Testfälle für verschiedene Varianten des Prüflings wird dadurch erschwert oder gar unmöglich.

Von ETSI (European Telecommunications Standards Institute) wurde eine Testbeschreibungssprache mit der Bezeichnung TTCN-3 in ETSI ES 201 873-1 bis -4 standardisiert. Diese Testsprache ermöglicht eine Erstellung von Testfällen unabhängig von einem dabei eingesetzten Testsystem. Auf das eingesetzte Testsystem wird über sogenannte Ports zugegriffen. Bei einem Port handelt es sich dabei um eine Menge von Signaturen, die im Folgenden als Testschritte bezeichnet werden. Ein Testschritt ist dabei eine bestimmte Funktion, die von einem Testfall aufgerufen werden kann, um einen Prüfling, wie beispielsweise ein elektronisches Steuergerät, zu stimulieren und zu vermessen. Dabei kann es sich beispielsweise um eine Funktion handeln, die einen Fehlerspeicher des Prüflings bzw. des Steuergerätes liest. TTCN-3 greift direkt über sogenannte System-Under-Test- und Platform-Adapter auf das eingesetzte Testsystem zu. Dabei sind die beiden Adapter, das heißt der System-Under-Test- und der Platform-Adapter, Bestandteile des aus TTCN-3 generierten ausführbaren Programms. Aufgrund dessen ist bei einer Veränderung des Testsystems auch eine neue Generierung des ausführbaren Programms notwendig. Ferner sind die aufrufbaren Testschritte auf die Testbeschreibungssprache TTCN-3 begrenzt.

Vorteile der Erfindung Das Problem der unterschiedlichen Programmiersprachen / Testsysteme wird im Telekommunikationsbereich durch die standardisierte Testbeschreibungssprache TTCN angegangen werden. Mit TTCN ist eine Methodik zur Beschreibung der Testsysteme durch Strukturelemente (Component, Port usw.) der Sprache möglich und bietet offene Schnittstellen zur Steuerung jeglicher Testsysteme. Die Version 3 der Testbeschreibungssprache TTCN, TTCN-3 bietet zu dem die Möglichkeit der prozeduralen Programmierung, damit kann sie erfindungsgemäß für den Softwaretest im Automobilbereich eingesetzt werden. Mit TTCN-3 ist nun eine Beschreibungssprache vorhanden. Diese wird erfindungsgemäß in Hardware- und Betriebssystem unabhängig eingesetzt.

Die Erfindung soll im Automobilbereich folgendes ermöglichen:
1.Eine einheitliche Methodik zur Testspezifikationsbeschreibung zu definieren
2.Testspezifikationen direkt zur Ausführung zu bringen
3. Testspezifikationen unabhängig vom Testobjekt (Object under Test) und Testsystem (System under Test) zu beschreiben

### Kern der Erfindung ist:

1. Die Methodik der Testfallerstellung (4-Schrittmethodik in allen Hierarchieebenen)
2. Die Abstraktion der Testspezifikation (in TTCN-3)
3. Die Methodik des Testfallerstellungs-Workflows (Vordefinierte Rollen und Arbeitsfluß)
4. Die Definition der werkzeuggestützten Testspezifikation (Frontend)

Die Erfindung kann so die beschriebenen Probleme beheben.

Gemäß der vorliegenden Erfindung wird nunmehr eine erfindungsgemäße Funktionseinheit gemäß Anspruch 1 und ein erfindungsgemäßes Verfahren gemäß Anspruch 10 bereitgestellt, mit deren Hilfe voranstehend genannte Probleme gelöst werden können. Weitere vorteilhafte Ausführungsformen sind in den entsprechenden Unteransprüchen aufgezeigt.

Gemäß Anspruch 1 wird eine Funktionseinheit zur Ausführung von logischen Testfällen auf einem an eine zu prüfende Einheit angekoppelten Testsystem bereitgestellt, wobei die Funktionseinheit dazu geeignet ist, zwischen die logischen Testfälle und das Testsystem derart zwischengeschaltet zu werden, daß die logischen Testfälle von dem Testsystem entkoppelt werden. Dabei unterstützt die Funktionseinheit in Form eines Mediators eine Ausführung der logischen Testfälle auf dem Testsystem.

Vorzugsweise ist die erfindungsgemäße Funktionseinheit dazu geeignet, eine Ausführung von logischen, testsystemunabhängigen Testfällen auf dem Testsystem zu unterstützen. Die erfindungsgemäße Funktionseinheit, im folgenden als Testsystem-Abstraktionsschicht (Test System Abstraction Layer TSAL) bezeichnet, entkoppelt die Testfälle von dem Testsystem. Testfälle können unabhängig von dem jeweiligen Testsystem entwickelt werden. Ein und derselbe Testfall ist somit auf verschiedenen Testsystemen auch verschiedener Hersteller ausführbar, ohne daß eine Anpassung oder ein erneutes Übersetzen des Testfalls nötig wäre.

In einer besonders bevorzugten Ausführungsform der erfindungsgemäßen Funktionseinheit weist die Funktionseinheit eine erste Schnittstelle zur Ankopplung von Testbeschreibungssprachen und/oder Testablaufsteuerungen, in welchen die logischen Testfälle realisiert sind, eine zweite Schnittstelle zur Registrierung von logischen testsystemunabhängigen Testschritten, die von den logischen Testfällen abrufbar sind und eine dritte Schnittstelle zur Ankopplung des Testsystems und zur Abbildung von Aufrufen von logischen Testschritten in Aufrufe an das Testsystem auf.

Testfälle für elektronische Steuergeräte stimulieren und vermessen den Prüfling, indem sie Testschritte aufrufen. Beispiele für derartige Testschritte sind Funktionen, die den Fehlerspeicher eines Steuergeräts lesen oder Funktionen, die eine Umgebungstemperatur oder eine Sollgeschwindigkeit eines Fahrzeugs setzen. Sogenannte Testwerkzeuge realisieren die Testschritte in Software oder Hardware. Die Gesamtheit aller Testwerkzeuge für ein Steuergerätetest wird als Testsystem bezeichnet. Der Zugriff auf den Prüfling, der in Hardware, in Software oder als ein Simulationsmodell vorliegen kann, erfolgt ausschließlich über derartige Testwerkzeuge. Im allgemeinen werden Testschritte, wie bereits eingangs erläutert, in Kategorien, sogenannte Ports, gruppiert. So werden bspw. alle Testschritte, die einen Zugriff auf eine Steuergerätdiagnose bewerkstelligen, in einem Port P_DIAG zusammengefaßt. Eine Zusammenfassung aller Testschritte zu einem Zugriff auf ein Fahrer-Fahrzeug-Umgebungs-Simulationsmodell ergibt einen Port P_MA. Ein derartiges Simulationsmodell wird zum Betrieb des Prüflings und als Testreferenz benötigt.

In einer weiteren bevorzugten Ausführungsform der erfindungsgemäßen Funktionseinheit sind über die erste Schnittstelle unter Verwendung jeweils geeigneter Adapter beliebige Testbeschreibungssprachen und/oder Testablaufsteuerungen ankoppelbar. Das bedeutet, daß Testfälle in beliebigen Testbeschreibungssprachen oder Testablaufsteuerungen implementiert werden können. Eine Ankopplung der Testbeschreibungssprachen und/oder der Testablaufsteuerung an die erfindungsgemäße Funktionseinheit erfolgt über sogenannte Test Language Adapter. Für jede Testbeschreibungssprache ist ein solcher Test Language Adapter zu implementieren. Die erste Schnittstelle wird auch als Test Language Interface bezeichnet, da über diese Schnittstelle eine Registrierung und Kommunikation mit den Test Language Adaptern stattfindet.

In einer weiteren bevorzugten Ausführungsform der erfindungsgemäßen Funktionseinheit sind über die zweite Schnittstelle einzelne und/oder in Kategorien gruppierte logische Testschritte deklarierbar und zur Ausführung von logischen Testfällen abrufbar. Die zweite Schnittstelle wird dabei als sogenannte Test Steps Interface bezeichnet.

In einer anderen bevorzugten Ausführungsform der erfindungsgemäßen Funktionseinheit sind über die dritte Schnittstelle unter Verwendung jeweils geeigneter Adapter beliebige, das Testsystem definierende Testwerkzeuge ankoppelbar. Durch eine Implementierung von sogenannten Tooladaptern wird somit die Möglichkeit gegeben, beliebige Testwerkzeuge an die erfindungsgemäße Funktionseinheit anzuschließen. Eine Registrierung und Kommunikation mit den Tool Adaptern erfolgt über die dritte Schnittstelle, die als Tool Adapter Interface bezeichnet wird. Die Tool Adapter setzen Aufrufe an die Testschritte in konkrete Funktionsaufrufe an die Testwerkzeuge um. Ein Tool Adapter entspricht somit einer konkreten Ausprägung eines oder mehrerer Ports.

Vorzugsweise ist ferner eine Verschaltung von an die Funktionseinheit angekoppelten einzelnen und/oder in Kategorien gruppierten logischen Testschritten und an die Funktionseinheit angekoppelten Testwerkzeugen konfigurierbar. Für eine Veränderung der Verschaltung ist dabei weder ein Anpassung der Testfälle noch eine Anpassung der Testwerkzeuge bzw. der entsprechenden Tooladapter notwendig.

In einer weiteren bevorzugten Ausführungsform der erfindungsgemäßen Funktionseinheit ist eine Funktionalität vorgesehen, mittels welcher von logischen Testfällen verwendete logische Adressen in physikalische Adressen abbildbar sind. Bei Einsatz einer erfindungsgemäßen Funktionseinheit werden in den Testfällen abstrakte logische Adressen verwendet. Die erfindungsgemäße Funktionseinheit bildet nun diese logischen Adressen in physikalische Adressen ab. Dies erfolgt vorzugsweise über konfigurierbare Übersetzungstabellen. Diese wiederum sind der Funktionseinheit hinterlegt.

Darüber hinaus ist vorzugsweise eine Funktionalität vorgesehen, mittels welcher eine Umrechnung von physikalischen Einheiten vornehmbar ist. Das bedeutet, daß in den Testfällen physikalische Einheiten für Parameter und Variablen verwendet werden können, unabhängig davon, welche Einheiten in den Testwerkzeugen verwendet werden. Die Umrechnung der Einheiten erfolgt in der erfindungsgemäßen Funktionseinheit. Somit entkoppelt die erfindungsgemäße Funktionseinheit Testfälle vom konkreten Prüfling. Testfälle können für Prüflinge in verschiedenen Entwicklungsversionen und in verschiedenen Konfigurationen wiederverwendet werden. So kann bspw. ein Fahrzeugdynamik-Steuergerät für verschiedene Fahrzeugtypen verwendet werden. Mittels der erfindungsgemäßen Funktionseinheit wird ein Aufbau einer Bibliothek von wiederverwendbaren logischen Testfällen ermöglicht. Bei der Wiederverwendung der Testfälle ist keine Anpassung der Testfälle nötig. Vorzugsweise erfolgt dabei die Umrechnung automatisch, damit z.B. in einem Testfall als Einheit für die Geschwindigkeit "m/s" und in einem Simulationsmodell innerhalb des Testsystems "km/h" verwendet werden kann. Der Testfall muss die im Simulationsmodell verwendete Einheit nicht kennen.

Ferner betrifft die vorliegende Erfindung ein Verfahren zur Ausführung von logischen Testfällen auf einem an einer zu prüfenden Einheit angekoppelten Testsystem. Dabei wird eine Funktionseinheit zwischen die logischen Testfälle und das Testsystem derart zwischengeschaltet, daß die logischen Testfälle von dem Testsystem und der zu prüfenden Einheit entkoppelt werden.

Vorzugsweise wird als Funktionseinheit eine erfindungsgemäße, vorab beschriebene Funktionseinheit verwendet.

In einer weiteren besonders bevorzugten Ausführungsform des erfindungsgemäßen Verfahrens werden über die zweite Schnittstelle der Funktionseinheit einzelne und/oder in Kategorien gruppierte logische Testschritte deklariert zur Ausführung von logischen Testfällen bereitgestellt.

Das erfindungsgemäße Computerprogramm umfaßt Programmcodemittel zur Durchführung des Verfahrens. Diese Programmcodemittel sind bspw. auf einem computerlesbaren Datenträger gespeichert.

Das erfindungsgemäße Verfahren sowie die erfindungsgemäße Funktionseinheit sind unabhängig davon, in welchem Entwicklungsstadium sich die zu prüfende Einheit bzw. der Prüfling befindet. Das bedeutet, daß der Prüfling als Steuergerät in Hardware vorliegen kann oder eine Komponente der Steuergerätesoftware oder ein Simulationsmodell des Steuergerätes sein kann.

Weitere Vorteile und vorteilhafte Ausgestaltungen ergeben sich aus der Beschreibung sowie den Merkmalen der Ansprüche.

### Zeichnung

Die Erfindung wird anhand der Figuren der Zeichnung näher erläutert. Dabei zeigt
Figur 1 eine schematische Darstellung einer Ausführungsform des erfindungsgemäßen Verfahrens und
Figur 2 eine schematische Darstellung einer weiteren Ausführungsform des erfindungsgemäßen Verfahrens.

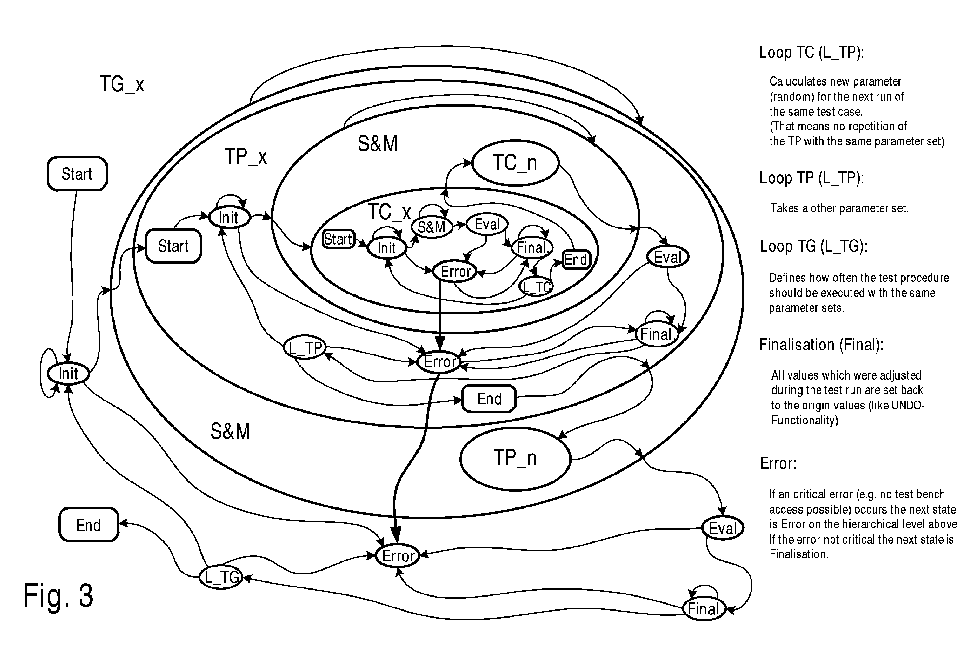

Eine Hierarchiebeschreibung einer Ausführungsform ist in Figur 3 dargestellt.

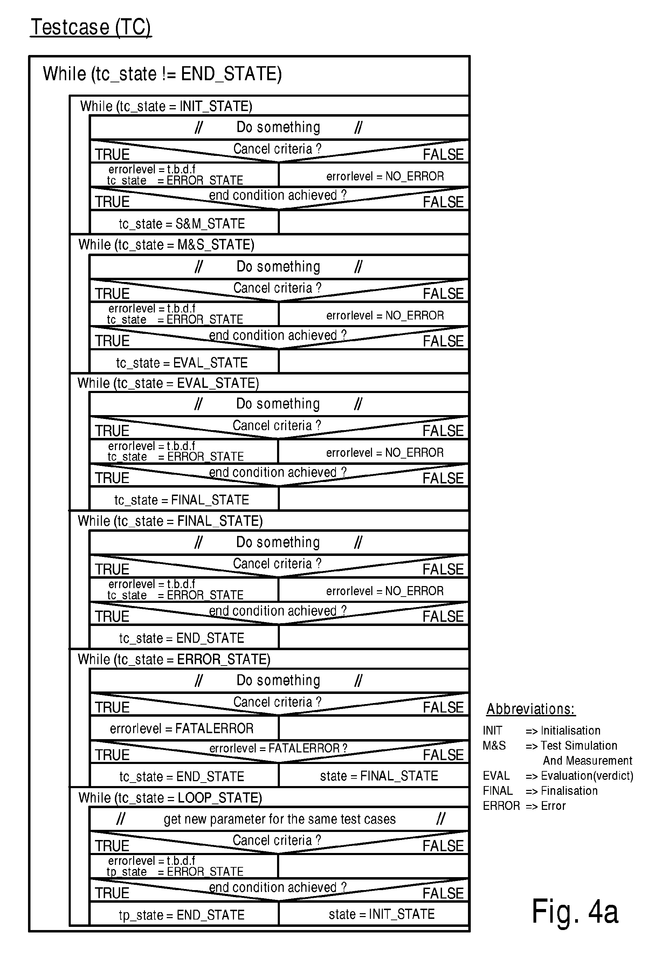

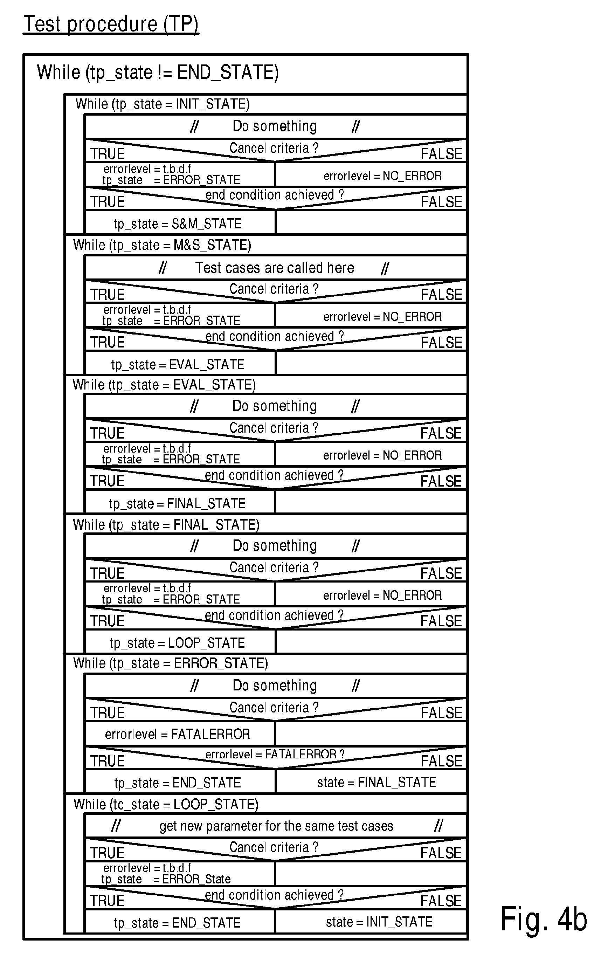

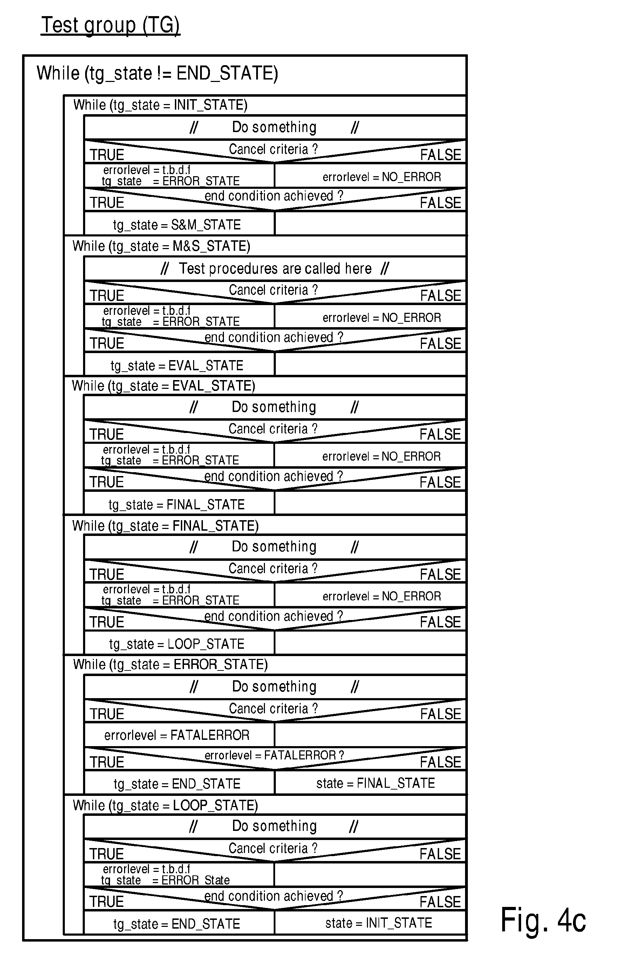

Das Strukturgramm der Zustandsautomaten TC, TP und TG wird in Figur 4 bestehend aus den Figuren 4a, 4b und 4c dargestellt.

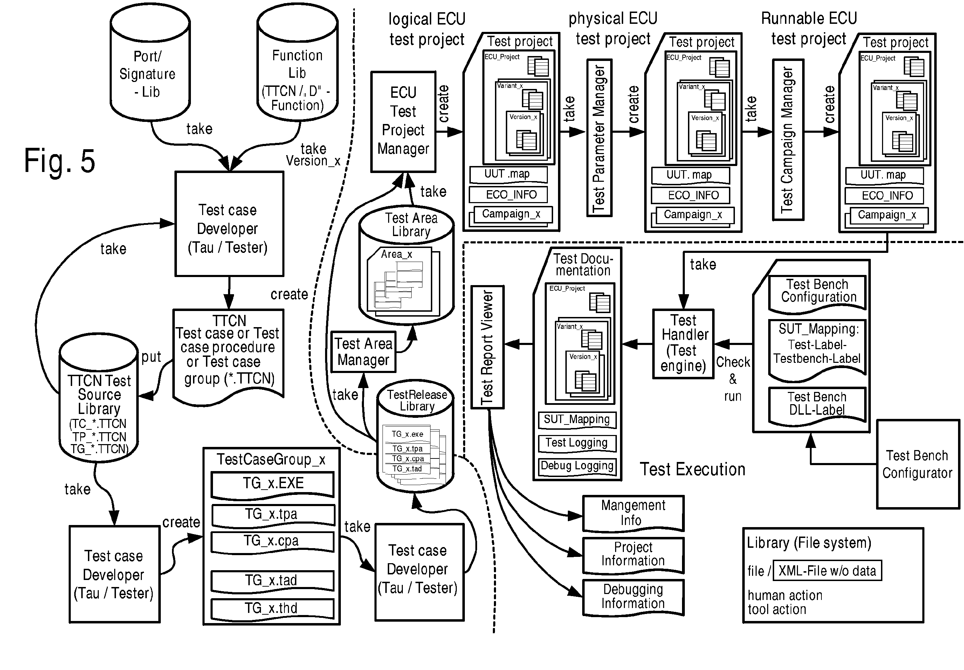

Ein Testfallerstellungsprozess (Test Design) ist beispielhaft in Figur 5 dargestellt.

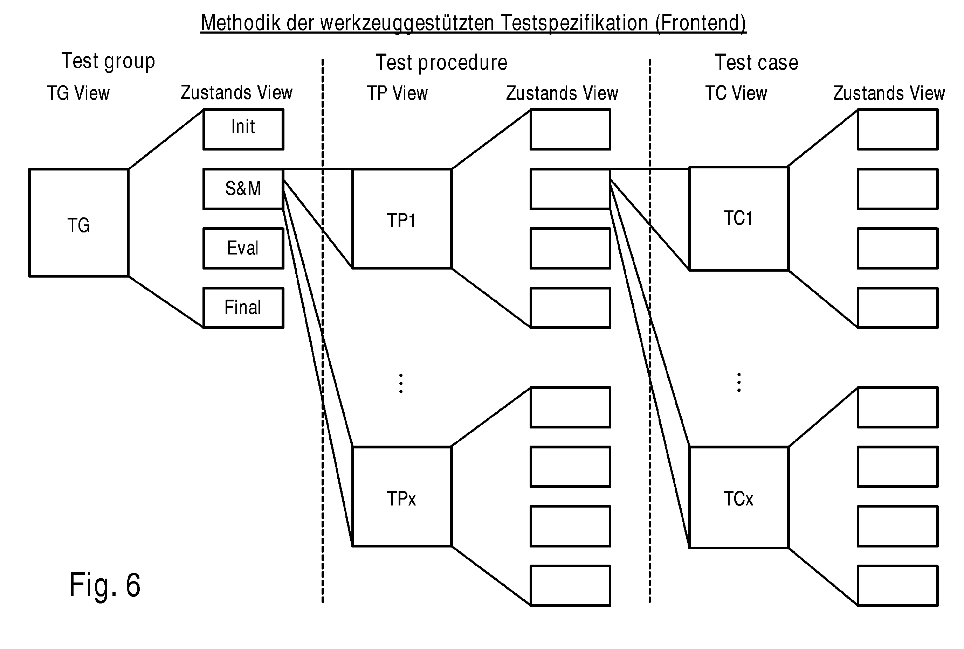

In Figur 6 schließlich wird eine Methodik der werkzeuggestützten Testspezifikation (Frontend) dargestellt.

Im weiteren wird die Erfindung anhand der Ausführungsbeispiele dargestellt.

### Ausführungsbeispiele

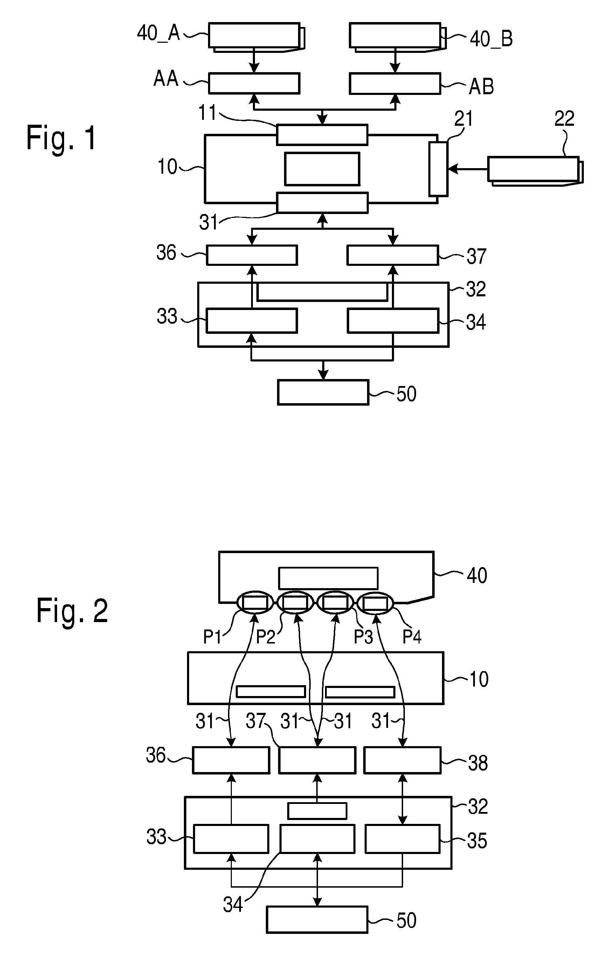

Figur 1 zeigt eine erfindungsgemäße Funktionseinheit TSAL 10. TSAL 10 verfügt über drei Schnittstellen. Die erste Schnittstelle 11 dient dabei zur Ankopplung von beliebigen Testbeschreibungssprachen oder Testablaufsteuerungen, in welchen die logischen Testfälle realisiert werden. Zur Ankopplung eines Testfalls 40_A, der in einer Testbeschreibungssprache A realisiert ist, wird der Schnittstelle 11 ein sogenannter Test Language Adapter AA vorgeschaltet. Zur Ankopplung eines Testfalls 40_B, der in einer Testbeschreibungssprache B realisiert ist, wird ferner ein sogenannter Test Language Adapter AB der Schnittstelle 11 vorgeschaltet. Eine zweite Schnittstelle 21 dient einer Registrierung von logischen, testsystemunabhängigen Testschritten, die von logischen Testfällen aus aufgerufen werden können. Über die Schnittstelle 21, die auch als Test Steps Interface bezeichnet wird, wird die Möglichkeit gegeben, Ports und deren Testschritte 22 zu deklarieren. Die Ports und Testschritte 22 können nach erfolgter Deklaration von den Testfällen verwendet, das heißt aufgerufen werden. Über die dritte Schnittstelle 31 wird ein Testsystem 32 angekoppelt. Im vorliegenden Fall wird das Testsystem 32 durch ein Testwerkzeug 33 und ein Testwerkzeug 34 gebildet. Die Testwerkzeuge 33 und 34 werden durch entsprechende Tool Adapter 36 und 37 an die Funktionseinheit 10 angeschlossen. Die Registrierung und Kommunikation mit den Tool Adaptern 36, 37 erfolgt über die dritte Schnittstelle 31, die auch als Tool Adapter Interface bezeichnet wird. Die Tool Adapter 36, 37 setzen Aufrufe an die Testschritte (22) in konkrete Funktionsaufrufe an die Testwerkzeuge 33, 34 um. Ein Tool Adapter entspricht einer konkreten Ausprägung eines oder mehrerer Ports.

In Figur 2 ist ebenfalls die Funktionseinheit TSAL 10 dargestellt. Ferner sind vier Ports P1, P2, P3 und P4 gezeigt, die von einem logischen Testfall 40 verwendet werden. Ferner ist die Funktionseinheit 10 über die Schnittstelle 31 an drei verschiedene Tool Adapter 36, 37, 38 angeschlossen, die wiederum mit entsprechenden das Testsystem 32 bildenden Testwerkzeugen 33, 34, 35 verbunden sind. Über die Testwerkzeuge 33, 34, 35 erfolgt letztlich der Zugriff auf die zu prüfende Einheit 50. Innerhalb der Funktionseinheit TSAL 10 ist es nun möglich, eine Zuordnung der einzelnen Ports P1, P2, P3, P4 zu den einzelnen Testwerkzeugen 33, 34, 35 zu konfigurieren. Es findet somit eine Verschaltung von Ports P1, P2, P3, P4 mit entsprechenden Tool Adaptern 36, 37, 38 statt, was durch dünne Pfeile kenntlich gemacht ist. Im hier dargestellten Fall wird der Port P1 über den Tool Adapter 36 mit dem Testwerkzeug 33 verschaltet. Der Port P2 und der Port P3 werden über den Tool Adapter 37 mit dem Testwerkzeug 34 und der Port P4 über den Tool Adapter 38 mit dem Testwerkzeug 35 gekoppelt. Die eigentliche Verschaltung erfolgt dabei innerhalb der Funktionseinheit 10. Für eine Veränderung der vorgenommenen Verschaltung ist weder eine Anpassung des Testfalles 40 noch eine Anpassung der Tool Adapter 36, 37, 38 notwendig, da die Verschaltung ausschließlich innerhalb der Funktionseinheit TSAL 10 vorgenommen wird. Die Testwerkzeuge 33, 34, 35 und deren Konfiguration können ausgetauscht werden, ohne den Testfall 40 anpassen zu müssen. Ein einmal erstellter Testfall 40 ist somit auf beliebigen Testwerkzeugen 33, 34, 35 lauffähig, solange die Testwerkzeuge 33, 34, 35 von der Funktionseinheit TSAL 10 unterstützt werden. Logische Adressen, die in dem Testfall 40 verwendet werden, werden mittels der Funktionseinheit TSAL 10 in physikalische Adressen abgebildet. Dadurch wird eine Entkopplung des Testfalls 40 sowohl von den Testwerkzeugen 33, 34, 35 als auch von der konkreten Ausführung der zu prüfenden Einheit 50 erreicht. Beispiel für eine logische Adresse wäre "vehicle speed", die in die physikalische Adresse "model.vehicle.speed" abgebildet wird. Ferner werden innerhalb der Funktionseinheit TSAL 10 von dem Testfall 40 verwendete physikalische Einheiten für Parameter und Variablen automatisch umgewandelt, so daß sie von den Testwerkzeugen 33, 34, 35 verwendet werden können. Das bedeutet, daß physikalische Einheiten automatisiert umgewandelt werden, damit bspw. in dem Testfall 40 als Einheit für die Geschwindigkeit "m/s" und in einem Simulationsmodell innerhalb des Testsystems 32 "km/h" verwendet werden kann. Der Testfall 40 muß dabei die im Simulationsmodell verwendete Einheit nicht kennen.

Die Erfindung definiert also eine Testentwicklungsmethodik und deren Ausführungswerkzeuge, welche in allen Bereichen des automatisierten Testens eingesetzt werden kann. Die Erfindung beruht im wesentlichen auf folgende Elementen gemäß dem oben genannten Kern der Erfindung:
1. Verwendung einer standardisierten Testautomatisierungssprache (z.B. TTCN3)
2. Einsatz einer werkzeugunterstützten Methodik und Struktur für Testprogramme
3. Entkopplung von Testsystemumgebung und Testbeschreibung durch Abstraktion

Nochmals eine Kurzbeschreibung in die Testbeschreibungssprache TTCN-3:

Durch die Verwendung von TTCN-3 gelingt es, die Testspezifikation von der Automatisierung zu entkoppelt, da es sich um eine Testbeschreibungssprache und nicht um eine Programmiersprache im eigentlichen Sinne handelt. TTCN-3 Code ist nicht direkt ausführbar, sondern muss erst in eine beliebige Programmiersprache umgesetzt werden. TTCN-3 Code kann prinzipiell in jede beliebige vorhandene Programmiersprache umgesetzt werden und somit ablauffähige Tests generiert werden.

Es bieten sich vor allem Sprachen an, die viele Systemplattformen unterstützen wie z.B. ANSI-C Java oder Scriptsprachen (TCL..). Es ist dazu ein Compiler TTCN auf die Zielsprache notwendig. Durch Austausch des Compilers kann auf jede beliebige Programmiersprache gewechselt werden ohne die Testbeschreibung zu ändern. Dadurch ist die Plattformunabhängigkeit und Zukunftssicherheit gewährleistet!

Beispielhaft wurde ANSI-C als Ablaufsprache definiert, da hierzu bereites geeignete Umsetzer existieren, z.B. der sogenannte TAU-Tester.

### Methodik der Testfallerstellung:

Die Erfindung definiert eine einheitliche Struktur für die einheitliche Beschreibung von Testfällen. Um dies zu ermöglichen, wird ein Testfall in drei Hierarchieebnen untergliedert:

Die 1. Stufe beschreibt Teile des Gesamtverhaltens einer einzelner Untersuchungen von Testkomponenten und wird als Test Case (TC) bezeichnet.

Die 2. Stufe beschreibt den eigentlichen Testablauf der jeweiligen Untersuchung der zu testenden Komponenten und wird als Test Case Procedure (TP) bezeichnet.

Die 3. Stufe gruppiert die einzelnen Untersuchungen der Test Case Procedures zu einem vollständigen Test der Komponente(n) und wird als Test Case Group (TG) bezeichnet.

### Hierarchiebeschreibung nach Figur 3:

Jede Hierarchiestufe wird durch vier Schritte (Zustände) beschrieben. Die Realisierung wird über einen Zustandsautomaten, welcher die vier Hauptschritte: Initialisierung (I-nit), Stimulation und Messung (S&M), Bewertung (Eval) und Abschluss (Final) beinhaltet. Des weiteren besitzt der Zustandsautomat Sonderzustände für die Fehlerbehandlung (Error) und einen Zustand für den iterativen Ablauf (L_x) der jeweiligen Hierarchiestufe. (Figur 3)

Die Aufgaben der einzelnen Schritte sind:

### Init :

Hier werden vorbereitende Maßnahmen getroffen, damit die jeweilige Stufe TG, TP, TC an sich ablaufen kann.

### S&M :

Der Zustand beschreibt den Prozess der Ausführung auf jeder Hierarchiestufe. Auf der Ebene TG werden die TPs aufgerufen, auf der Ebene der TP werden die TCs aufgerufen, auf der Ebene TC werden die Stimulationen und Messungen für die jeweilige Untersuchung beschrieben.

### EVAL:

Hier findet die Auswertung und die Bildung des Testergebisses der jeweiligen Hierarchiestufe statt. Das Gesamtergebnis wird auf der Ebene der TG gebildet.

### Final:

Hier werden alle beeinflussten Größen wieder auf ihren Ursprungswert zurückgesetzt, den sie bei Eintritt in die jeweilige Hierarchieebne hatten.

### Die Aufgaben der Sonderzustände sind:

### Error:

Hier findet die Fehlerbehandlung der jeweiligen Hierarchieebene statt, falls die Zustände Init, S&M, Eval, Final und L_x nicht ordnungsgemäß ausgeführt werden.

### L_x:

Hier werden jeweils die Parametersätze für den nächsten I-terationsschritt ermittelt.

Das Strukturgramm der Zustandsautomaten TC, TP und TG wird in Figur 4 bestehend aus den Figuren 4a, 4b und 4c dargestellt.

### Abstraktion der Testspezifikation:

Um logische Testfälle abstrakt beschreiben zu können, definiert die Erfindung Mechanismen die notwendig sind, um Testumgebung (Testbench Signal-Mapping und Testbench Konfiguration), das zu untersuchende Objekt (ECU-Signal Mapping) und die dazu benötigten Größen (Parameterset) zu entkoppeln. (Folgende Mapping - Mechanismen sind hierzu notwendig:

### 1. ECU-Signal Mapping

Ordnet dem abstrakten Testfallparameter einen projektspezifischen Namen zu und übernimmt die physikalische Umrechnung der Einheiten (Beispiel m nach cm, kg nach g, usw.). Durch diesen Mechanismus ist somit die Testspezifikation von dem zu untersuchenden Testobjekt unabhängig beschreibbar.

### 2. Testbench Signal Mapping

Ordnet dem abstrakten Testfallparameter einen testumgebungsspezifischen Namen zu und übernimmt die physikalische Umrechnung der Einheiten (Beispiel m nach cm, kg nach g, usw.) Durch diesen Mechanismus ist somit die Testspezifikation von der vorhanden Testumgebung, die für das zu untersuchende Testobjekt benötigt wird, unabhängig beschreibbar.

### 3. Parameterset

Durch die Verwendung von Parametersets wird eine strikte Trennung zwischen Testablauf und Testdaten erreicht. Aufgrund dieser Tatsache kann ein und der selbe Testfall auf unterschiedliche Objekte (z.B. Steuergeräte) angewendet werden und somit wird eine Wiederverwendbarkeit der Testfälle erreicht.

### 4.Testbench Konfiguration

Stellt die Verbindung/Schnittstelle zwischen dem funktionalen Aufruf (z.B. Diagnosezugriff auf ein Steuergerät) und dem dazu benötigen Tool dar. Hierzu wurden standardisierte Aufrufsfunktionen definiert. Um ein Tool anbinden zu können, muss somit eine toolspezifische Funktionsbibliothek erstellt werden, welche die Verbindung zwischen standardisierter Aufrufsfunktion und der toolspezifischen Umsetzung realisiert. Daraus folgt, dass die Testfallbeschreibung unabhängig von den eingesetzten Tools erfolgen kann.

Zur Methodik des Testfallerstellungs-Workflows wird der Testfallerstellungsprozess strikt vom Anwendungsprozess getrennt Testfallerstellungsprozess (Test Design) und Anwendungsprozess nach Figur 5:

Zur Erstellung von abstrakten logischen Testfällen wird die Rolle des "Test case developer" eingeführt. Die Aufgabe dieser Rolle ist es anhand von Bibliotheksfunktion und bereits erstellten Testabläufen (TC und TP) wiederum neue Testfälle zu generieren. Der "Test case developer" arbeitet mit der Testbeschreibungssprache TTCN-3 und er dazu gehörigen Testsuite . Der "Test case developer" kann alle verfügbaren Elemente von TTCN-3 nutzen. Damit eine formaler Rahmen eingehalten wird, sind spezielle organisationsspezifische Coding-Rules (Kochbuch) notwendig. Dazu gilt es Richtlinien festzulegen wie diese in Figur 5 beschrieben sind. Die Schnittstelle zum Anwendungsprozess wird über eine Bibliothek (TestRelease Library) definiert.

### Anwendungsprozess (Test Process Tools):

Um den Anwendungsprozess umsetzen zu können, beschreibt die Erfindung folgenden Workflow bzw. unterschiedliche Rollen. Der Workflow wird wie folgt beschrieben:

### 1. Logisches Testprojekt (logical ECU Test project)

Ein logisches Testprojekt besteht aus einer Ansammlung von abstrakten logischen Testfällen, welche von dem untersuchenden Testobjekt (z.B. Steuergerätesoftware) benötigt werden und noch nicht parametriert sind. Abhängig von der Organisation sind Testfälle vorgruppiert (Test areas) und in einer Bibliothek (Test Area Library) vorhanden. Das Testprojekt kann für unterschiedliche Software Varianten und deren Versionen des Testobjekts zusammengestellt werden. Für die Erstellung des logischen Testprojekts wird die Rolle des "Test Project Manager" eingeführt. Der "Test Project Manager" stellt aus den Bibliotheken "TestRelease Library" und "Test Area Library" das logische Testprojekt zusammen. Des weiteren fügt er Information über das Steuergeräteprojekt hinzu. Das wären
1. Steuergeräte spezifische Metadaten (Projektname, SW-File, .....)
2. Mess- und Kalibrierdaten (ASAM-MCD2 Datei)
3. ECU-Signal Mapping (Unit Under Test UUT-Mapping) Datei.

Die Schnittstelle zur nächsten Rolle "Test Parameter Manager" ist der logische Testprojekt Container (Dateien oder Datenbankeintrag).

### 2. Physikalisches Testprojekt (physical ECU Test project)

Ein physikalisches Testprojekt besteht aus dem erstellten logischen Testprojekt Container und den dazugehörigen projektspezifischen Datensätzen (Parameter.xml). Für die Erstellung dieser Datensätze wird die Rolle des "Test Parameter Manager" eingeführt. Der "Test Parameter Manager" adaptiert die logischen Testfälle, welche von dem "Test Project Manger" vorgegeben wurden auf das zu untersuchende Testobjekt. Durch diesen Vorgang wird ein logisches Testprojekt in eine physikalisches Testprojekt übertragen und wäre somit ablauffähig. Die Schnittstelle zur nächsten Rolle "Test Campaign Manager" ist der physikalische Testprojekt Container.

### 3. Ausführbares Testprojekt (runnable ECU test project)

Ein ausführbares Testprojekt besteht aus dem kompletten physikalischen Testprojekt oder aus einer Teilmenge davon. Für die Erstellung des "runnable ECU test project" wird die Rolle des "Test Campaign Manager" eingeführt. Der "Test Campaign Manager" erstellt aus dem parametrierten Testprojekt mit Hilfe von Kontrollparametern unterschiedliche bzw. varianten- oder. versionsspezifische Testabläufe (Campaigns) zusammen. Diese Campaigns können auch für Freigabetests verwendet werden. Die Schnittstelle zur nächsten Rolle "Test Handler" ist der Test Campaign Container.

### 4. Testausführung

Für die Testausführung wird die Rolle "Test Handler" eingeführt. Die Aufgabe des "Test Handler" sind:
- Aufrüsten des Testsystem (Testbench) nach Vorgaben des auszuführenden Testprojekts (Meta-Daten).
- Laden und Starten des geforderten Testablaufes (Campaign)
- Einführung von Iterationsschleifen zur genaueren Untersuchung bei fehlerhaften Testabläufen.

Nach Beendigung des jeweiligen Testablaufes wird automatisch ein Testdokumentations-container erstellt, der wiederum die Schnittsstelle zur nächsten Rolle "Test Report Viewer" darstellt.

### 5. Testdokumentation

Eine Testdokumentation besteht aus unterschiedlichen Sichten (Managementsicht , Projektsicht, Detailsicht usw.), hierfür wird die Rolle des "Test Report Viewer" eingeführt. Der "Test Report Viewer" erstellt Testdokumentationen für unterschiedliche Sichten. Die erstellten Testdokumentationen wiederum, stellen eine weitere Schnittstelle dar, z.B. die Kundenschnittstelle.

### 6. Testplatzkonfiguration (TestBench)

Die Testplatzkonfiguration beschreibt das Testsystem in seinen zerlegbaren Komponenten (Hardware, Softwaretools, Softwareschnittstellen, .....). Hierfür wird die Sonderrolle des "Test Bench Configurator" eingeführt. Der "Test Bench Configurator" erstellt die detaillierten Beschreibungen der einzelnen Komponenten. Die Beschreibung ist die Schnittstelle zu den abstrakt beschriebenen Testfällen (siehe 2.3.4.1). Hierzu ist eine enge Zusammenarbeit mit der Rolle "Test Projekt Manager" notwendig.

### Methodik der werkzeuggestützten Testspezifikation (Frontend) gemäß Figur 6:

Damit die Testfallersteller in dem vorgegebenen Rahmen (4-Schrittmethodik usw.) ihre Spezifikation einfach erstellen können, ist dafür eine Benutzerschnittstelle (Frontend) notwendig, um den Benutzer zu leiten. Dafür ist folgendes Konzept vorgesehen:

### Kurzbeschreibung:

Der Testfallersteller kreiert menuegesteuert einen neuen Testfall (TC oder TP oder TG), das heißt, die einzeln auszufüllenden Bereiche der 4-Schrittmethode werden ihm in unterschiedlichen Fenstern hierarchisch dargestellt. Er kann in dem jeweiligen State-Window nur für dieses zugelassene Schritte einfügen bzw. auswählen (Coding Rules). Das jeweilige Fenster überprüft jeweils Syntax und Ausführbarkeit des TTCN-3 Codes gemäß der TTCN-3 Konvention sowie gegen die definierten Coding-Rules.

Durch das Frontend wird erreicht, dass die erstellten Richtlinien sowie das formale Vorgehen eingehalten werden.

## Patentansprüche

1. Funktionseinheit (10) zur Ausführung von logischen Testfällen (40) auf einem an eine zu prüfende Einheit (50) angekoppelten Testsystem (32), wobei die Funktionseinheit (10) dazu geeignet ist, zwischen die logischen Testfälle (40) und das Testsystem (32) derart zwischengeschaltet zu werden, daß die logischen Testfälle (40_A, 40_B, 40) von dem Testsystem (32) entkoppelt werden, und dabei als Mediator eine Ausführung der logischen Testfälle (40_A, 40_B, 40) auf dem Testsystem (32) zu unterstützen.

2. Funktionseinheit nach Anspruch 1, bei der die Funktionseinheit (10) dazu geeignet ist, eine Ausführung von logischen, testsystemunabhängigen Testfällen (40_A, 40_B, 40) auf dem Testsystem (32) zu unterstützen.

3. Funktionseinheit nach einem der Ansprüche 1 oder 2, bei der die Funktionseinheit (10) eine erste Schnittstelle (11) zur Ankopplung von Testbeschreibungssprachen und/oder Testablaufsteuerungen (A, B), in welchen die logischen Testfälle (40_A, 40_B, 40) realisiert sind,
eine zweite Schnittstelle (21) zur Registrierung von logischen testsystemunabhängigen Testschritten (22), die von den logischen Testfällen (40_A, 40_B, 40) abrufbar sind, und
eine dritte Schnittstelle (31) zur Ankopplung des Testsystems (32) und zur Abbildung von Aufrufen von logischen Testschritten (22) in Aufrufe an das Testsystem (32) aufweist.

4. Funktionseinheit nach einem der vorhergehenden Ansprüche, bei der über die erste Schnittstelle (11) unter Verwendung jeweils geeigneter Adapter (AA, AB) beliebige Testbeschreibungssprachen (A, B) und/oder Testablaufsteuerungen ankoppelbar sind.

5. Funktionseinheit, bei der über die zweite Schnittstelle (21) einzelne und/oder in Kategorien gruppierte logische Testschritte (22) deklarierbar und zur Ausführung von logischen Testfällen (40_A, 40_B, 40) abrufbar sind.

6. Funktionseinheit nach einem der vorhergehenden Ansprüche, bei der über die dritte Schnittstelle (31) unter Verwendung jeweils geeigneter Adapter (36, 37, 38) beliebige, das Testsystem (32) definierende Testwerkzeuge (33, 34, 35) ankoppelbar sind.

7. Funktionseinheit nach einem der vorhergehenden Ansprüche, bei der eine Verschaltung von angekoppelten einzelnen und/oder in Kategorien gruppierten logischen Testschritten (22) und angekoppelten Testwerkzeugen (33, 34, 35) konfigurierbar ist.

8. Funktionseinheit nach einem der vorhergehenden Ansprüche, bei der eine Funktionalität vorgesehen ist, mittels welcher von logischen Testfällen (40_A, 40_B, 40) verwendete logische Adressen in physikalische Adressen abbildbar sind.

9. Funktionseinheit nach einem der vorhergehenden Ansprüche, bei der eine Funktionalität vorgesehen ist, mittels welcher eine Umrechnung von physikalischen Einheiten vornehmbar ist.

10. Verfahren zur Ausführung von logischen Testfällen (40) auf einem an einer zu prüfenden Einheit (50) angekoppelten Testsystem (32), wobei eine Funktionseinheit (10) zwischen die logischen Testfälle (40_A, 40_B, 40) und das Testsystem (32) derart zwischengeschaltet wird, daß die logischen Testfälle (40_A, 40_B, 40) von dem Testsystem (32) und der zu prüfenden Einheit (50) entkoppelt werden.

11. Verfahren nach Anspruch 10, bei dem als Funktionseinheit (10) eine Funktionseinheit nach einem der Ansprüche 1 bis 9 verwendet wird.

12. Verfahren nach Anspruch 11, bei dem über die zweite Schnittstelle (21) der Funktionseinheit (10) einzelne und/oder in Kategorien gruppierte logische Testschritte (22) deklariert und zur Ausführung von logischen Testfällen (40_A, 40_B, 40) bereitgestellt werden.

13. Computerprogramm mit Programmcodemitteln, um alle Schritte eines Verfahrens nach einem der Ansprüche 10 bis 12 durchzuführen, wenn das Computerprogramm auf einem Computer ausgeführt wird.

14. Computerprogrammprodukt mit Programmcodemitteln, die auf einem computerlesbaren Datenträger gespeichert sind, um ein Verfahren nach einem der Ansprüche 10 bis 12 durchzuführen, wenn das Computerprogramm auf einem Computer ausgeführt wird.
